(19) Europäisches Patentamt
European Patent Office
Office européen des brevets

(11) **EP 2 435 816 B1**

(12) **FASCICULE DE BREVET EUROPEEN**

(45) Date de publication et mention de la délivrance du brevet:
**11.05.2016 Bulletin 2016/19**

(21) Numéro de dépôt: **10728837.5**

(22) Date de dépôt: **28.05.2010**

(51) Int Cl.:
*G01N 21/31* (2006.01)    *G01N 21/49* (2006.01)
*G01N 21/47* (2006.01)    *G01N 21/85* (2006.01)
*G01N 21/65* (2006.01)

(86) Numéro de dépôt international:
**PCT/FR2010/051029**

(87) Numéro de publication internationale:
**WO 2010/136732 (02.12.2010 Gazette 2010/48)**

(54) **SONDE SPECTROSCOPIQUE ET PROCÉDÉ POUR DÉTECTER UNE INHOMOGÉNÉITÉ**

SPEKTROSKOPISCHE SONDE UND VERFAHREN FÜR DEN NACHWEIS EINER INHOMOGENITÄT

SPECTROSCOPIC PROBE AND METHOD FOR DETECTING AN INHOMOGENEITY

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **28.05.2009  FR 0953521**
**21.01.2010  FR 1050379**
**28.01.2010  US 695551**
**28.01.2010  US 695718**

(43) Date de publication de la demande:
**04.04.2012  Bulletin 2012/14**

(73) Titulaire: **Indatech**
**34730 Prades Le Lez (FR)**

(72) Inventeurs:
• **CHAUCHARD, Fabien**
**F-34730 Prades Le Lez (FR)**
• **ROUSSEL, Sylvie**
**F-34730 Prades Le Lez (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**WO-A1-00/20843          US-A- 5 825 488**
**US-A1- 2002 180 953     US-A1- 2005 226 548**
**US-B1- 6 678 541**

**Description**

La présente invention concerne une sonde spectroscopique pour dispositif d'analyse, par spectroscopie, d'un échantillon. Cette invention a, encore, trait à un procédé de détection, par spectroscopie, d'une inhomogénéité dans un échantillon ainsi qu'à un procédé de détermination, là encore par spectroscopie, du coefficient d'absorption et/ou de diffusion d'un tel échantillon, plus particulièrement mettant en oeuvre une telle sonde.

Cette invention concerne le domaine de la fabrication des dispositifs permettant de procéder à une analyse d'un échantillon par spectroscopie.

A ce propos, on observera que la spectroscopie est une technique largement mise en oeuvre dans l'industrie et dans la recherche lorsqu'il s'agit d'analyser des échantillons aussi bien solides que liquides.

En fait, on connaît différents types de spectroscopies, chacun de ces types, d'une part, correspondant sensiblement à une gamme de longueurs d'onde de la lumière émise (UV, visible, infrarouge, proche infrarouge, moyen infrarouge, Raman) et, d'autre part, permettant de caractériser plus particulièrement certains échantillons et/ou de déterminer certaines caractéristiques d'un tel échantillon.

En particulier, il est connu de mettre en oeuvre une technique de spectroscopie pour caractériser des produits constitués, à titre d'exemples non limitatifs, par des comprimés pharmaceutiques, des gels, des émulsions, des poudres, des farines, des produits en suspension.

Plus spécifiquement, une telle technique de spectroscopie peut, alors, être mise en oeuvre pour déterminer l'homogénéité et/ou l'uniformité d'un tel produit.

A ce propos, on connaît différentes méthodes permettant de déterminer une telle homogénéité et/ou une telle uniformité.

En particulier, une première méthode consiste, d'une part, à illuminer un échantillon en un point d'illumination et, d'autre part, à mesurer plusieurs séries de spectres en un point de mesure, distinct du point d'illumination, et fixe par rapport à celui-ci.

En fait, cette méthode consiste, entre deux séries de spectres, soit à repositionner (manuellement ou automatiquement) l'échantillon afin d'acquérir des spectres en différentes zones de cet échantillon, soit à agiter mécaniquement cet échantillon (plus particulièrement en employant un mélangeur).

Un premier inconvénient de cette méthode consiste en ce que le repositionnement de l'échantillon prend un certain temps. Un second inconvénient de cette méthode consiste en ce qu'un mauvais repositionnement de l'échantillon induit une variation dans le spectre qui sera interprétée comme une inhomogénéité alors qu'il s'agit, au contraire, d'une simple erreur de manipulation et/ou de positionnement.

Pour remédier à ces inconvénients, il a été imaginé une nouvelle technique consistant à soumettre l'échantillon à deux mesures dont l'une est en réflexion tandis que l'autre est en transmission. Cette technique génère, cependant, un nouvel inconvénient consistant en ce que les spectres obtenus ne sont aucunement comparables car ils correspondent à des lumières ayant parcouru des trajets différents par rapport à l'échantillon.

Une deuxième méthode, visant à déterminer l'homogénéité et/ou l'uniformité d'un produit, consiste à utiliser une caméra hyperspectrale pour acquérir une image en deux dimensions de ce produit et constituée par une pluralité de pixels.

En fait, cette méthode consiste, tout d'abord, à acquérir au moins un spectre pour chaque pixel de l'image du produit et, ensuite, à analyser et à comparer entre eux le ou les spectres de ces pixels.

De manière avantageuse, cette méthode permet d'analyser l'intégralité de la surface du produit et de comparer des spectres acquis dans des conditions (éclairage de l'échantillon, trajets de la lumière par rapport à cet échantillon...) similaires.

Cette méthode présente un certain nombre d'inconvénients. Ainsi, un premier inconvénient de cette méthode consiste en ce que le temps d'acquisition des spectres est particulièrement long (notamment de l'ordre de plusieurs minutes) ce qui rend cette méthode difficilement envisageable pour une caractérisation en continu d'un produit.

Cependant, l'inconvénient principal de cette méthode consiste en ce que seule la surface de l'échantillon peut être analysée. Ainsi, cette méthode ne permet aucunement de détecter la présence d'une inhomogénéité physique (agglomérat) ou chimique (concentration de principe actif) localisée sous la surface du produit et en profondeur de celui-ci.

La demande de brevet US 2002/0180953 A1 divulgue une sonde spectroscopique pour dispositif d'analyse, par spectroscopie, d'un échantillon, la sonde comportant une fibre optique pour éclairer l'échantillon à analyser avec une lumière incidente, trois faisceaux de fibres optiques pour capter une lumière réémise par l'échantillon à analyser sous l'effet de la lumière incidente et une surface de contact, orientée en direction de l'échantillon à analyser, au niveau ou à proximité de laquelle se situent la fibre optique pour éclairer l'échantillon et les faisceaux de fibres optiques pour capter la lumière réémise. Lesdits faisceaux de fibres optiques sont agencés autour de la fibre optique d'éclairage à distance égale de celle-ci et décalés angulairement d'un angle de 120°.

La demande de brevet WO 00/20843 A1 décrit un procédé de détection de l'hétérogénéité d'un échantillon en utilisant une sonde spectroscopique comportant deux fibres optiques d'illumination et six fibres optiques de détection, lesdites fibres de détection étant juxtaposées et agencées le long d'une ligne droite reliant les deux fibres optiques d'illumination.

L'invention se veut à même de remédier aux inconvénients des dispositifs et procédés de l'état de la technique, ceci par le biais d'une sonde spectroscopique de conception nouvelle et d'un nouveau procédé de caractérisation.

A cet effet, l'invention concerne une sonde spectroscopique pour dispositif d'analyse, par spectroscopie, d'un échantillon telle que définie dans la revendication 1.

L'invention concerne, également, un procédé de détection, par spectroscopie, d'une inhomogénéité dans un échantillon tel que défini dans la revendication 14.

Des modes de réalisation préférés sont définis dans les revendications dépendantes.

La sonde conforme à l'invention permet, avantageusement, de capter la lumière rétrodiffusée par l'échantillon à une même distance de la source lumineuse mais en différents points (espacés entre eux) de l'échantillon, ceci dans les mêmes conditions d'analyse (même lumière incidente, même longueur d'onde, même position de la sonde par rapport à l'échantillon...), en une seule opération et sans avoir à déplacer ou à repositionner cet échantillon ou la sonde.

La lumière émise en direction de l'échantillon, non seulement est réémise par la surface de cet échantillon, mais pénètre également à l'intérieur de cet échantillon avant d'être réémise. Ceci permet, avantageusement, de détecter une inhomogénéité et/ou une absence d'uniformité aussi à la surface de l'échantillon qu'au coeur de celui-ci.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

- la figure 1 est une vue schématisée d'un dispositif d'analyse, par spectroscopie, d'un échantillon comportant une sonde spectroscopique conforme à l'invention ;
- la figure 2 est une vue schématisée et de face de l'extrémité libre de la sonde illustrée figure 1 et correspondant à un premier mode de réalisation de cette sonde ;
- la figure 3 est une vue schématisée de la sonde illustrée figure 2 et en contact avec la surface d'un échantillon à analyser et contenant une inhomogénéité ;
- la figure 4 est une vue similaire à la figure 2 et correspondant à un deuxième mode de réalisation de la sonde.

La présente invention concerne le domaine de la fabrication des dispositifs permettant de procéder à une analyse d'un échantillon E par spectroscopie.

De manière connue, un tel dispositif 1 d'analyse, par spectroscopie, comporte une sonde spectroscopique 2 dont les caractéristiques sont décrites plus en détail ci-dessous.

Ce dispositif 1 d'analyse comporte, encore, un moyen 3 pour émettre une lumière monochromatique ou polychromatique, plus particulièrement dans une gamme de longueurs d'ondes de l'ultraviolet, du visible, de l'infrarouge, du proche infrarouge ou encore du moyen infrarouge. Cette lumière émise sera utilisée pour éclairer l'échantillon E à analyser, plus particulièrement par le biais de la sonde spectroscopique 2 susmentionnée.

De plus, le dispositif 1 d'analyse comporte des moyens 4 pour mesurer et/ou traiter au moins un signal optique réémis par l'échantillon E, plus particulièrement sous l'effet de l'éclairage de cet échantillon E par la lumière susmentionnée.

En outre, ce dispositif 1 d'analyse comporte des moyens 5 pour raccorder, à la sonde spectroscopique 2, ledit moyen 3 pour émettre une lumière mono ou polychromatique et/ou lesdits moyens 4 pour mesurer et/ou traiter au moins un signal optique réémis.

De manière connue, ce moyen 3 pour émettre une lumière mono ou polychromatique ainsi que les moyens 4 pour mesurer et/ou traiter un signal optique peuvent être intégrés au sein d'un spectromètre de type ultraviolet, visible, infrarouge, proche infrarouge, moyen infrarouge ou Raman.

L'invention concerne, plus particulièrement, une sonde spectroscopique 2 qui adopte une forme ainsi que des dimensions autorisant, selon le cas, une préhension aisée par un opérateur en charge de l'analyse de l'échantillon E ou son montage sur un support que comporte une installation d'analyse, de production ou de convoyage d'un tel échantillon E.

En particulier, une telle sonde 2 peut adopter la forme d'un tube présentant, d'une part, une section de préférence circulaire, d'autre part, une longueur comprise entre 100 et 800mm (de préférence de l'ordre de 200 à 600mm) et, d'autre part encore, un diamètre externe compris entre 5mm et 35mm (de préférence de l'ordre de 15mm).

Cette sonde 2 comporte, d'une part, une première extrémité 20 au niveau de laquelle cette sonde 2 est raccordée au moyen 3 pour émettre une lumière mono ou polychromatique ainsi qu'aux moyens 4 pour mesurer et/ou traiter au moins un signal optique réémis, ceci par le biais des moyens de raccordement 5, et, d'autre part, une deuxième extrémité 21 (dite libre) pourvue d'une surface de contact 22, destinée à être orientée en direction de l'échantillon E à analyser, et au travers de laquelle cette sonde 2 coopère avec cet échantillon E.

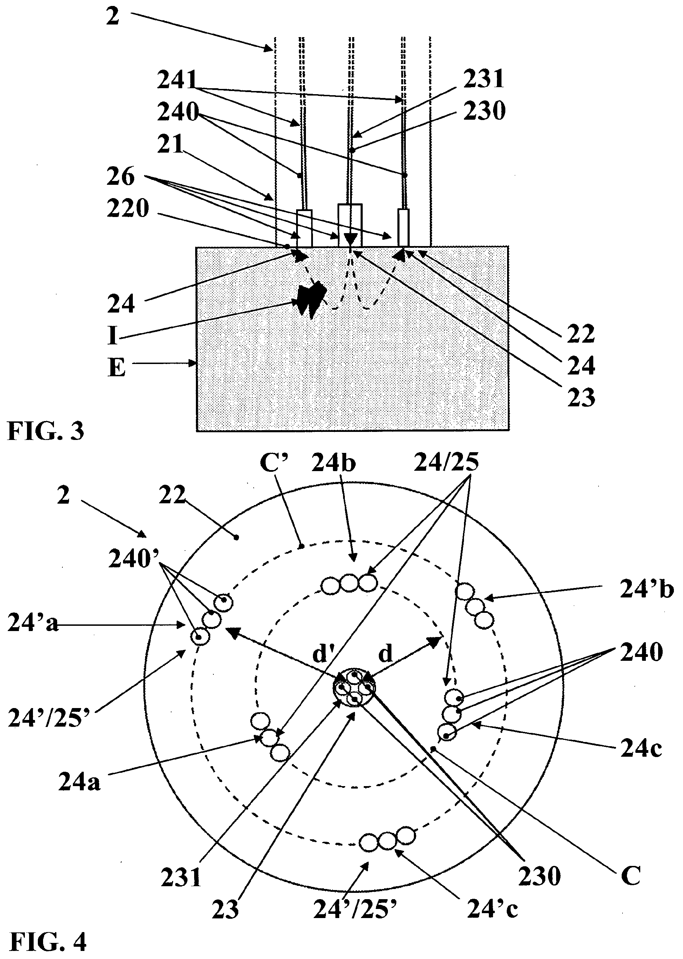

A ce propos, il convient d'observer que la surface de contact 22 de cette sonde 2 peut coopérer avec cet échantillon E de manière directe, plus particulièrement par contact direct entre cette surface de contact 22 et cet échantillon E comme illustré figure 3.

Cependant, cette surface de contact 22 peut, encore, coopérer avec cet échantillon E de manière indirecte, plus particulièrement par le biais d'un élément intermédiaire, interposé entre cette surface de contact 22 et cet échantillon E. Un tel élément intermédiaire peut être constitué par une fenêtre de mesure (en verre, quartz, saphir ou analogue), d'une part, à l'avant de laquelle se positionne cette surface de contact 22, d'autre part, à l'arrière de laquelle se situe l'échantillon E et, d'autre part encore, que comporte notamment une unité de transport ou de fabrication de cet échantillon E.

Un tel élément intermédiaire peut, encore, être constitué par un élément diffusant comme il sera décrit ci-dessous.

Une autre caractéristique de cette surface de contact 22 consiste en ce qu'elle s'étend dans une direction faisant un angle déterminé par rapport à la direction générale d'extension de la sonde 2 (plus particulièrement par rapport à l'axe du tube que comporte cette sonde 2).

Selon un premier mode de réalisation non représenté, cette surface de contact 22 s'étend dans une direction faisant un angle compris entre 35 et 55° (de préférence 45°) par rapport à la direction de l'axe du tube.

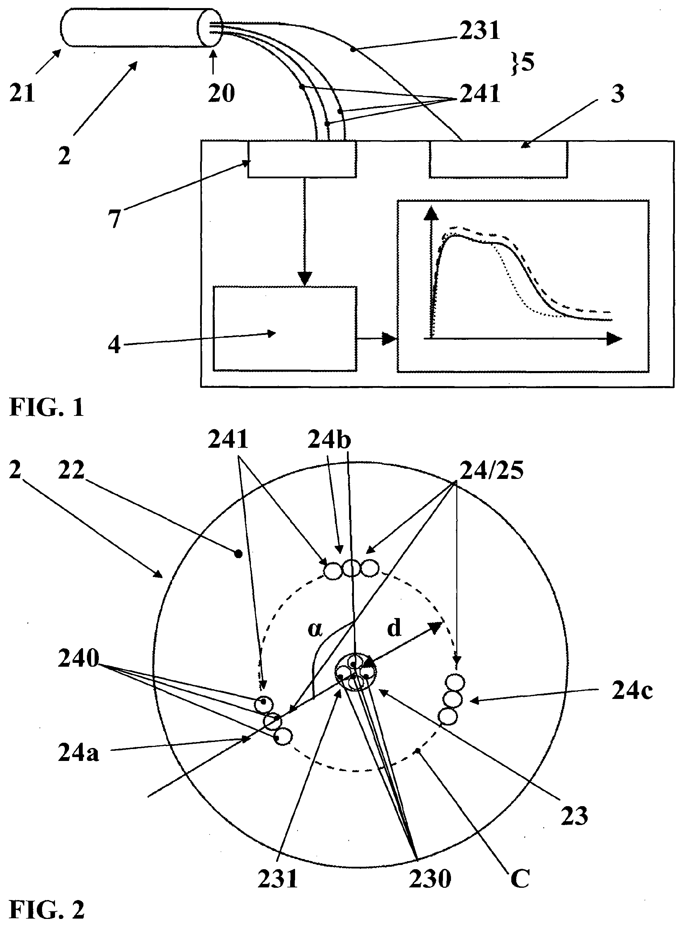

Cependant et tel que visible sur les figures 1 et 3, cette surface de contact 22 s'étend, de préférence, de manière sensiblement perpendiculaire à l'axe de ce tube.

Une autre caractéristique de cette sonde spectroscopique 2 consiste en ce qu'elle comporte, d'une part, des moyens 23 pour éclairer l'échantillon E à analyser avec une lumière incidente, en l'occurrence celle émise par le moyen 3 susmentionné pour émettre une lumière mono ou polychromatique (plus particulièrement dans une gamme de longueurs d'ondes de l'ultraviolet, du visible, de l'infrarouge, du proche infrarouge ou encore du moyen infrarouge) et, d'autre part, des moyens (24 ; 24') pour capter une lumière (là encore monochromatique ou polychromatique, plus particulièrement dans une gamme de longueurs d'ondes de l'ultraviolet, du visible, de l'infrarouge, du proche infrarouge ou encore du moyen infrarouge) réémise par l'échantillon E à analyser sous l'effet de la lumière incidente.

En fait, ces moyens 23 pour éclairer l'échantillon E et/ou ces moyens (24 ; 24') pour capter la lumière réémise par cet échantillon E se situent à proximité de la surface de contact 22 (notamment en retrait par rapport à cette surface de contact 22) ou, et de préférence, au niveau de cette surface de contact 22 (notamment de manière affleurante avec cette surface de contact 22).

Selon l'invention, les moyens (24 ; 24') pour capter la lumière réémise par l'échantillon E constituent au moins un jeu (25 ; 25') de moyens (24 ; 24') pour capter cette lumière réémise. Un tel jeu (25 ; 25') comporte une pluralité de ces moyens (24a, 24b, 24c ; 24'a, 24'b, 24'c) pour capter la lumière réémise agencés, chacun, d'une part, de manière espacée par rapport aux autres et, d'autre part, à égale distance (d ; d') des moyens 23 pour éclairer l'échantillon E ou du barycentre de ces moyens 23 pour éclairer l'échantillon E.

En fait, un tel jeu (25 ; 25') de moyens (24 ; 24') pour capter la lumière réémise par l'échantillon E comporte au moins deux de ces moyens (24 ; 24') pour capter la lumière réémise, voire (et de préférence comme illustré figures 2 à 4) trois (24a, 24b, 24c ; 24'a, 24'b, 24'c) de ces moyens (24 ; 24') pour capter la lumière réémise.

Selon un premier mode de réalisation illustré figures 2 et 3, les moyens 24 pour capter la lumière réémise par l'échantillon E constituent un unique jeu 25 de moyens 24 pour capter cette lumière réémise. Un tel jeu 25 comporte, alors, une pluralité de ces moyens (24a, 24b, 24c) pour capter la lumière réémise agencés, chacun, de manière espacée par rapport aux autres et à égale distance d des moyens 23 pour éclairer l'échantillon E ou de leur barycentre.

Cependant et selon un autre mode de réalisation, les moyens (24 ; 24') pour capter la lumière réémise par l'échantillon E constituent une pluralité de jeux (25 ; 25') de moyens (24 ; 24') pour capter cette lumière réémise. Chacun de ces jeux (25 ; 25') comporte une pluralité de ces moyens (24a, 24b, 24c ; 24'a, 24'b, 24'c) pour capter la lumière réémise agencés, chacun, de manière espacée par rapport aux autres et à égale distance (d ; d') des moyens 23 pour éclairer l'échantillon E ou de leur barycentre. De plus, les moyens (24 ; 24') pour capter la lumière réémise et que comporte un tel jeu (25 ; 25') sont situés, par rapport aux moyens 23 pour éclairer l'échantillon ou à leur barycentre, à une distance (d ; d') distincte de celle (d' ; d) à laquelle sont situés les moyens (24' ; 24) pour capter la lumière réémise par l'échantillon E et que comporte un autre jeu (25' ; 25) de ces moyens (24' ; 24).

Chacun de ces jeux (25 ; 25') comporte, ainsi, d'une part, une pluralité (24a, 24b, 24c ; 24'a, 24'b, 24'c) de ces moyens (24 ; 24') pour capter la lumière réémise agencés, chacun, de manière espacée par rapport aux autres et à égale distance (d ; d') des moyens 23 pour éclairer l'échantillon ou de leur barycentre et, d'autre part, des moyens (24 ; 24') pour capter la lumière réémise situés à une distance (d ; d') des moyens 23 pour éclairer l'échantillon E ou de leur barycentre distincte de celle (d' ; d) des moyens (24' ; 24) pour capter la lumière réémise que comporte un autre jeu (25' ; 25).

Il a été illustré figure 4 un mode de réalisation particulier correspondant à une sonde 2 comportant deux jeux (25 ; 25') de moyens (24 ; 24') pour capter la lumière réémise par l'échantillon E et situés à deux distances (d ; d') distinctes des moyens 23 pour éclairer l'échantillon E ou de leur barycentre.

Selon une autre caractéristique de l'invention, les moyens (24 ; 24') pour capter la lumière réémise par l'échantillon E et que comporte un même jeu (25 ; 25') de ces moyens (24 ; 24'), sont agencés selon un cercle (C ; C') dont le centre est confondu avec les moyens 23 pour éclairer l'échantillon ou avec leur barycentre.

Dans le cas d'une pluralité de jeux (25 ; 25') de moyens (24 ; 24') pour capter la lumière réémise (plus particulièrement deux de ces jeux 25 ; 25' comme illustré figure 4), les moyens (24 ; 24') pour capter la lumière réémise que comporte un jeu (25 ; 25') de ces moyens (24 ; 24') et les moyens (24' ; 24) pour capter la lumière réémise que comporte un autre jeu (25' ; 25) de ces moyens (24' ; 24) sont agencés selon deux cercles concentriques (C ; C') dont le centre est confondu avec les moyens 23 pour éclairer l'échantillon ou avec leur barycentre.

Une caractéristique additionnelle de l'invention consiste en ce que les moyens (24 ; 24') pour capter la lumière réémise par l'échantillon E et que comporte un même jeu (25 ; 25') de ces moyens (24 ; 24'), sont répartis angulairement de manière régulière selon le cercle (C ; C'), notamment de manière équiangulaire.

A ce propos, on observera que les moyens (24 ; 24') pour capter la lumière réémise par l'échantillon E, et que comporte un même jeu (25 ; 25') de ces moyens (24 ; 24'), sont répartis selon un tel cercle (C ; C'), ceci en sorte que deux moyens (24 ; 24') pour capter la lumière réémise et se succédant sur ce cercle (C ; C') sont décalés angulairement d'un angle $\alpha$ compris entre 30 et 180°, de préférence compris entre 36 et 120°.

Ainsi, pour un angle $\alpha$ de 180°, un tel jeu (25 ; 25') comporte deux moyens (24 ; 24') pour capter la lumière réémise tandis que pour un angle $\alpha$ de 30° un tel jeu (25 ; 25') en comporte 12.

De manière préférentielle, la sonde comporte entre 3 (mode de réalisation préféré illustré figures 2 et 4) et 10 jeux (25 ; 25') correspondant à un décalage angulaire de 120°, respectivement 36°.

C'est, plus particulièrement, un tel décalage angulaire d'angle $\alpha$ qui permet, alors, un espacement de chacun des moyens (24 ; 24') pour capter la lumière réémise que comporte un même jeu (25 ; 25') par rapport aux autres moyens (24 ; 24') de ce même jeu (25 ; 25').

Dans le cas d'une pluralité de jeux (25 ; 25') de moyens (24 ; 24'), les moyens (24 ; 24') pour capter la lumière réémise que comporte un jeu (25 ; 25') de ces moyens (24 ; 24') sont décalés angulairement (là encore de préférence de manière régulière) par rapport aux moyens (24' ; 24) pour capter la lumière réémise que comporte un autre jeu (25' ; 25) de ces moyens (24' ; 24).

A ce propos, on observera que les moyens (24 ; 24') pour capter la lumière réémise que comporte un jeu (25 ; 25') de ces moyens (24 ; 24') sont situés sur la bissectrice d'un angle formé par deux moyens successifs (24'a, 24'b ; 24a, 24b) pour capter la lumière réémise que comporte un autre jeu (25' ; 25) de ces moyens (24' ; 24) et par les moyens d'éclairage 23 ou leur barycentre.

En d'autres termes, les moyens (24 ; 24') pour capter la lumière réémise que comporte un jeu (25 ; 25') de ces moyens (24 ; 24') sont décalés équiangulairement par rapport à deux moyens (24' ; 24) successifs pour capter la lumière réémise que comporte un autre jeu (25' ; 25) de ces moyens (24' ; 24).

Selon l'invention, chaque moyen (24 ; 24') pour capter la lumière réémise par l'échantillon E comporte une série (241 ; 241') de fibres optiques (240 ; 240') constituée par une pluralité de fibres optiques (240 ; 240'), plus particulièrement par 3 fibres optiques (240 ; 240') comme illustré figures 2 à 4, les fibres optiques étant juxtaposées et agencées conformément à un arc de cercle (plus particulièrement correspondant au cercle C ; C' susmentionné) dont le centre est confondu avec les moyens 23 pour éclairer l'échantillon E ou avec leur barycentre.

Tel que mentionné ci-dessus, les moyens (24 ; 24') pour capter la lumière réémise par l'échantillon E et que comporte un même jeu (25 ; 25') de ces moyens (24 ; 24') sont agencés, chacun, de manière espacée par rapport aux autres.

A ce propos, on observera que, selon une caractéristique additionnelle, l'espace entre deux moyens (24 ; 24') pour capter la lumière réémise par l'échantillon E, que comporte un même jeu (25 ; 25'), et qui se succèdent selon un même cercle (C ; C'), correspond au moins à la largeur (c'est à dire au diamètre d'une fibre optique 240 ; 240') d'un tel moyen (24 ; 24') pour capter la lumière réémise, voire (et de préférence) à la longueur d'un tel moyen (24 ; 24'). En fait, une telle longueur est définie, soit par le diamètre d'une fibre optique (240 ; 240') lorsqu'un tel moyen (24 ; 24') est constitué par une unique fibre optique (240 ; 240'), soit par la somme du diamètre de chacune des fibres optiques (240 ; 240') que comporte un moyen (24 ; 24') constitué par une série (241 ; 241') de fibres optiques (240 ; 240') .

Selon une autre caractéristique de l'invention, les moyens 23 pour éclairer l'échantillon E comportent au moins une fibre optique 230 ou (et de préférence) au moins un faisceau de fibres optiques 231, plus particulièrement constitué par au moins deux fibres optiques 230.

Il convient d'observer qu'une fibre optique (que comporte les moyens 23 pour éclairer l'échantillon E et/ou les moyens 24 ; 24' pour capter la lumière réémise par cet échantillon E) présente une extrémité positionnée, soit à proximité de la surface de contact 22 de la sonde 2 (notamment en retrait par rapport à cette surface de contact 22), soit au niveau de cette surface de contact 22 (notamment de manière affleurante avec cette surface de contact 22).

La ou les fibres optiques 230 des moyens 23 pour éclairer l'échantillon E présentent une autre extrémité raccordée au moyen 3 susmentionné pour émettre une lumière mono ou polychromatique, voire au spectromètre.

De même, les fibres (240 ; 240') des moyens (24 ; 24') pour capter la lumière réémise par l'échantillon E présentent une autre extrémité raccordée aux moyens 4 pour mesurer et/ou traiter un signal optique, voire au spectromètre.

Ces fibres optiques (230 ; 240) constituent, alors, les moyens 5 pour raccorder la sonde 2, selon le cas, à ce moyen 3 pour émettre une lumière mono ou polychromatique et/ou à ces moyens 4 pour mesure et/ou traiter un signal optique, voire au spectromètre.

Une autre caractéristique de la sonde 2 spectroscopique consiste en ce que sa surface de contact 22 comporte au moins un moyen 220 pour recevoir la lumière réémise par l'échantillon E.

Selon un premier mode de réalisation, ce moyen 220 pour recevoir la lumière réémise est de type réfléchissant et est constitué, soit par au moins une portion polie ou blanche de cette surface de contact 22, soit par un revêtement réfléchissant que comporte au moins une portion de cette surface de contact 22.

Un mode particulier de réalisation consiste en ce que la surface de contact 22 de la sonde 2 est au moins en partie réalisée en métal et que le moyen 220 (de type réfléchissant) pour recevoir la lumière réémise est, alors, constitué par le métal poli de cette surface de contact 22.

Selon un deuxième mode de réalisation, ce moyen 220 pour recevoir la lumière réémise est de type au moins en partie absorbant et est constitué, soit par un matériau coloré constituant au moins une portion de cette surface de contact 22, soit par un revêtement coloré que comporte au moins une portion de cette surface de contact 22.

Un mode particulier de réalisation consiste en ce que ce moyen 220 pour recevoir la lumière réémise est de type complètement absorbant et est constitué, soit par un matériau de couleur noire (plus particulièrement une résine époxy et graphite) entrant dans la composition de cette surface de contact 22, soit par un revêtement noir rapporté, appliqué ou (et de préférence) déposé sur cette surface ce contact 22.

Une caractéristique additionnelle consiste en ce que la sonde 2 comporte au moins une ouverture traversante 26, ménagée dans la paroi de cette sonde 2, plus particulièrement dans la paroi au niveau de laquelle est définie la surface de contact 22 de la sonde 2.

En fait, une telle ouverture traversante 26 débouche au niveau de cette surface de contact 22 et est destinée à recevoir, intérieurement, au moins un moyen 23 pour éclairer l'échantillon E ou au moins un moyen (24, 24') pour capter le lumière réémise (plus particulièrement au moins une fibre optique que comporte un tel moyen d'éclairage 23 ou de captage 24), dont l'extrémité se positionne, de préférence, de manière sensiblement affleurante avec cette surface de contact 22.

On observera que, dans le cas d'un moyen d'éclairage 23 et/ou d'un moyen de captage (24 ; 24) constitués par un faisceau 231 ou une série (241 ; 241') de fibres optiques (230 ; 240 ; 240'), plus particulièrement positionnées de manière juxtaposée, une telle ouverture traversante 26 peut être constituée par une fente ménagée dans la paroi de la sonde 2 au niveau de laquelle est définie la surface de contact 22.

Finalement, la sonde 2 de l'invention comporte, encore, un moyen pour protéger les moyens 23 pour éclairer l'échantillon et/ou les moyens 24 pour capter une lumière réémise par cet échantillon E, voire la surface de contact 22.

En fait, un tel moyen pour protéger est positionné à l'avant de cette surface de contact 22 et contre cette surface de contact 22, plus particulièrement en étant rapporté sur celle-ci 22.

Selon un mode de réalisation préféré, ce moyen pour protéger est constitué par une fenêtre en verre (plus particulièrement en verre borosilicate de type BK7) ou en un matériau minéral à base d'oxydes d'aluminium (plus particulièrement en saphir) positionnée à l'avant des fibres.

L'invention concerne, également, un dispositif 1 d'analyse d'un échantillon E par spectroscopie.

Tel que mentionné ci-dessus, un tel dispositif 2 comporte une sonde spectroscopique 2 présentant les caractéristiques décrites ci-dessus.

Ce dispositif d'analyse 1 comporte, encore, un spectromètre incorporant, d'une part, le moyen 3 (susmentionné) pour émettre une lumière monochromatique ou polychromatique et, d'autre part, les moyens 4 (susmentionnés) pour mesurer et/ou traiter au moins un signal optique réémis par l'échantillon E.

Ce dispositif d'analyse 1 comporte, également, des moyens 5 pour raccorder la sonde spectroscopique 2 au spectromètre, plus particulièrement audit moyen 3 pour émettre une lumière mono ou polychromatique et/ou auxdits moyens 4 pour mesurer et/ou traiter au moins un signal optique réémis.

De plus, ce dispositif d'analyse 1 comporte un organe 7 interposé entre ces moyens 5 de raccordement et lesdits moyens 4 pour mesurer et/ou traiter au moins un signal optique.

Un tel organe 7 est constitué par un multiplexeur optique, un imageur (par exemple un capteur CCD 2D) ou (et de préférence) un multiplexeur.

Un tel organe 7 est conçu pour permettre une mesure et/ou un traitement individuel du signal optique capté par chacun des moyens (24 ; 24') pour capter la lumière réémise.

Tel que mentionné ci-dessus, ce dispositif d'analyse 1 peut, encore, comporter un élément, interposé entre la surface de contact 22 que comporte la sonde 2 et l'échantillon E à analyser, et conçu pour diffuser au moins la lumière incidente.

En fait, un tel élément diffusant peut être, soit indépendant de la sonde 2 (plus particulièrement sous la forme d'un élément mobile positionné à la surface de l'échantillon E et par rapport auquel la sonde 2 se déplace), soit associé à cette sonde 2. Celle-ci 2 peut, alors, comporter des moyens pour le montage et/ou la réception (notamment de manière amovible) d'un tel élément diffusant.

Un tel élément diffusant permet, de manière avantageuse, d'éclairer cet échantillon E de manière diffuse et sur une grande surface, notamment sur une surface dont l'étendue est notablement supérieure à celle de la surface de contact 22 de la sonde 2.

L'utilisation d'un tel élément diffusant permet, alors avantageusement, d'analyser des échantillons E très absorbants (comme par exemple un bitume, du graphite, une peinture, du charbon...) ou des échantillons E très diffusants (comme par exemple un produit pulvérulent, notamment une poudre, une farine...) .

Finalement, le dispositif d'analyse 1 conforme à l'invention peut, encore, comporter des moyens (non représentés) pour positionner l'échantillon E de manière alignée par rapport à la sonde 2. C'est, plus particulièrement, cette sonde 2 qui peut, alors, comporter un tel moyen de positionnement qui sera associé cette sonde 2 (notamment en étant placé sur celle-ci 2) par des moyens appropriés.

En fait, un tel moyen de positionnement est, avantageusement, conçu pour aligner la sonde 2 par rapport à un échantillon E, plus particulièrement lorsque celui-ci présente une surface courbée (comme c'est le cas pour un échantillon E constitué par un comprimé pharmaceutique ou analogue).

La présente invention concerne, également, un procédé de détection, par spectroscopie, d'une inhomogénéité I dans un échantillon E.

A ce propos, on observera que, dans la suite de la description, il sera fait référence à une inhomogénéité I qui peut aussi bien être de type physique (comme un agrégat, un grain, un bloc de matière ou analogue) que de type chimique (comme une concentration différente ou analogue et constituant un défaut d'uniformité de l'échantillon E).

Ce procédé consiste en ce que :

- on éclaire l'échantillon E avec une lumière incidente, ceci à l'aide de moyens 23 pour éclairer cet échantillon E avec une telle lumière incidente ;
- on capte la lumière réémise par l'échantillon E sous l'effet de la lumière incidente, ceci à l'aide de moyens (24 ; 24') pour capter une telle lumière réémise par l'échantillon E.

Ce procédé est caractérisé par le fait que :

- on capte la lumière réémise par l'échantillon E, ceci en différents endroits agencés, chacun, de manière espacée par rapport aux autres et situés à égale distance des moyens 23 pour éclairer cet échantillon E ou de leur barycentre ;
- à partir des signaux correspondant à la lumière réémise et captée en au moins deux endroits différents, on détermine la présence d'une inhomogénéité I dans l'échantillon E.

Selon une autre caractéristique de ce procédé, on capte la lumière réémise par l'échantillon E, ceci en différents endroits agencés selon un cercle (C ; C') dont le centre est confondu avec les moyens 23 pour éclairer l'échantillon ou avec leur barycentre.

De préférence, ces différents endroits sont répartis angulairement de manière régulière selon ce cercle (C ; C').

De plus et tel que mentionné ci-dessus, ces endroits sont répartis selon un tel cercle (C ; C'), ceci en sorte que deux de ces endroits, se succédant sur ce cercle (C ; C'), sont décalés angulairement d'un angle $\alpha$ compris entre 30 et 180°, de préférence compris entre 36 et 120°.

Tel que mentionné ci-dessus, ce procédé permet de déterminer la présence d'une inhomogénéité I dans l'échantillon E à partir des signaux correspondant à la lumière réémise et captée en au moins deux endroits différents.

A ce propos, on observera que, selon un premier mode de réalisation, ce procédé permet de déterminer la présence d'une inhomogénéité chimique dans l'échantillon E, ceci :

- en divisant un signal correspondant à la lumière captée en un endroit par un signal correspondant à la lumière captée en un autre endroit ;
- et en mettant en évidence, par cette division, un pic (notamment pour une longueur d'onde donnée).

Selon ce même mode de réalisation, ce procédé permet, également, de déterminer la présence d'une inhomogénéité physique dans l'échantillon E, ceci :

- en divisant un signal correspondant à la lumière captée en un endroit par un signal correspondant à la lumière captée en un autre endroit ;
- et en mettant en évidence, par cette division, un quotient différent de 1.

Selon un deuxième mode de réalisation, ce procédé permet de déterminer la présence d'une inhomogénéité I dans l'échantillon E, ceci :

- en calculant un intervalle de confiance relatif à des variations possibles d'un signal correspondant à la lumière réémise par au moins un échantillon de référence réputé homogène ;
- en mettant en évidence un signal, correspondant à la lumière captée en un endroit d'un échantillon E à analyser, et se situant en dehors de cet intervalle de confiance.

Bien entendu, ce mode de réalisation implique, préalablement au calcul de l'intervalle de confiance, l'analyse, par spectroscopie, d'au moins échantillon de référence réputé homogène.

Finalement et selon un troisième mode de réalisation, ce procédé consiste en ce qu'on détermine la présence d'une inhomogénéité I dans l'échantillon E, ceci:

- en procédant à une analyse en composante principale ;
- en utilisant comme critère statistique, la distance de Hotteling, les résidus ou les leviers.

Ce procédé de détection, par spectroscopie, d'une inhomogénéité I dans un échantillon E est mis en oeuvre par un dispositif 1 d'analyse présentant les caractéristiques décrites ci-dessus et/ou comportant au moins une sonde spectroscopique 2 présentant les caractéristiques décrites ci-dessus.

En particulier et tel que mentionné ci-dessus, ce procédé consiste en ce qu'on capte la lumière réémise par l'échantillon E, ceci en différents endroits situés à égale distance d des moyens 23 pour éclairer cet échantillon E ou de leur barycentre.

En fait, pour capter la lumière réémise par l'échantillon E en ces différents endroits de cet échantillon E, il est particulièrement avantageux de recourir à la sonde spectroscopique 2 faisant l'objet de la présente invention et comportant, tel que décrit ci-dessus, des moyens (24 ; 24') pour capter la lumière réémise par l'échantillon constituant au moins un jeu (25 ; 25') de moyens (24 ; 24') pour capter cette lumière réémise. Un tel jeu (25 ; 25') comporte, tel que susmentionné, une pluralité de ces moyens (24 ; 24') pour capter la lumière réémise, agencés, chacun, de manière espacée par rapport aux autres et à égale distance (d ; d') des moyens 23 pour éclairer l'échantillon E ou de leur barycentre. Ces moyens (24 ; 24') que comporte un tel jeu (25 ; 25') sont, ainsi, positionnés en différents endroits situés à égale distance (d ; d') des moyens 23 pour éclairer cet échantillon E ou de leur barycentre, ce qui permet, par conséquent, de mettre en oeuvre le procédé conforme à l'invention.

Une telle sonde 2 peut, alors, comporter un unique jeu 25 de moyens 24 pour capter cette lumière réémise. Ces moyens 24 sont agencés, au niveau de la sonde 2 (plus particulièrement au niveau de la surface de contact 22 de cette sonde 2), en différents endroits situés à égale distance d des moyens 23 pour éclairer cet échantillon E ou de leur barycentre. Ainsi, le procédé selon l'invention consiste à capter la lumière réémise par l'échantillon E en différents endroits de cet échantillon E correspondant à la position des moyens 24 pour capter la lumière réémise et que comporte cet unique jeu 25 de moyens 24.

Cependant et tel que décrit ci-dessus, une telle sonde 2 peut, également, comporter une pluralité de jeux (25 ; 25') de moyens (24 ; 24') pour capter la lumière réémise par l'échantillon E.

Dans un pareil cas, le procédé de détection, par spectroscopie, d'une inhomogénéité I est assuré en mettant en oeuvre une telle sonde 2 et, en particulier, en procédant à une détection d'une inhomogénéité I en mettant en oeuvre l'un de ces jeux (25 ; 25') ou une pluralité de ces jeux (25 ; 25'), ceci individuellement et pour chacun de ces jeux (25 ; 25').

En fait, en mettant en oeuvre une pluralité de ces jeux (25 ; 25'), le procédé consiste en ce qu'on capte la lumière réémise par l'échantillon E en différents endroits, d'une part, situés à égale distance (d ; d') des moyens 23 pour éclairer cet échantillon E ou de leur barycentre et, d'autre part, correspondant à un même jeu (25 ; 25') de moyens (24 ; 24'), ceci pour chacun des jeux (25 ; 25') de la pluralité de jeux (25 ; 25') mis en oeuvre.

L'invention concerne, alors, également, l'utilisation d'une sonde spectroscopique 2, présentant les caractéristiques décrites ci-dessus (et pouvant être spécifiquement développée et conçue), pour la mise en oeuvre de ce procédé de détection, par spectroscopie, d'une inhomogénéité I dans un échantillon E.

Le procédé consiste, alors, à mesurer et à traiter le signal optique capté par des groupes de fibres agencés, d'une part, à égale distance des moyens d'éclairage et, d'autre part, chacun de manière espacée par rapport aux autres, plus particulièrement de la manière décrite ci-dessus (répartition angulaire, décalage angulaire, espacement...).

Un mode de réalisation préféré comprend en outre la détermination, par spectroscopie, du coefficient d'absorption $\mu$a et/ou de diffusion $\mu$s' de l'échantillon E.

Cette détermination consiste en ce que :

- on éclaire l'échantillon E avec une lumière incidente, ceci à l'aide de moyens 23 pour éclairer cet échantillon E avec une telle lumière incidente ;

- on capte la lumière réémise par l'échantillon sous l'effet de la lumière incidente, ceci à l'aide de moyens (24 ; 24') pour capter une telle lumière réémise par l'échantillon E, ceci en au moins deux endroits différents situés chacun à une distance (d ; d') différente des moyens 23 pour éclairer cet échantillon ou de leur barycentre ;
- à partir des signaux correspondant à la lumière réémise et captée en ces différents endroits, on détermine le coefficient d'absorption $\mu$a et/ou de diffusion $\mu$s' de l'échantillon E.

De manière préférée, lorsqu' on capte la lumière réémise par l'échantillon E, on capte cette lumière en au moins un endroit situé sur un premier cercle C dont le centre est confondu avec les moyens 23 pour éclairer l'échantillon ou avec leur barycentre, ainsi qu'en au moins un autre endroit situé sur un deuxième cercle C', de rayon différent de celui du premier cercle C, et dont le centre est confondu avec les moyens 23 pour éclairer l'échantillon ou avec leur barycentre.

A ce propos, on observera que le procédé de détermination, par spectroscopie, du coefficient d'absorption $\mu$a et/ou de diffusion $\mu$s' d'un échantillon E peut, avantageusement, être mis en oeuvre par une sonde spectroscopique 2 (telle que décrite ci-dessus) comportant une pluralité de jeux (25 ; 25') de moyens (24 ; 24') pour capter la lumière réémise par un échantillon E et/ou par un dispositif d'analyse 1 comportant au moins une telle sonde spectroscopique 2.

Là encore, la lumière, captée en un endroit situé à une distance (d ; d') des moyens 23 pour éclairer l'échantillon E ou de leur barycentre, est captée par un moyen (24 ; 24') pour capter une telle lumière et que comporte un jeu (25 ; 25') de ces moyens (24 ; 24').

Tel que mentionné ci-dessus, on détermine le coefficient d'absorption $\mu$a et/ou de diffusion $\mu$s' de l'échantillon E, ceci à partir des signaux correspondant à la lumière réémise par l'échantillon E et captée en différents endroits de cet échantillon E.

En fait, pour déterminer ces coefficients d'absorption $\mu$a et/ou de diffusion $\mu$s', on analyse ces signaux en utilisant l'équation de la diffusion de Farrel, ceci dans le cadre de la technique de la spectroscopie résolue spatialement.

A ce propos, on observera que les signaux, correspondant à la lumière réémise par l'échantillon E et captée en différents endroits de cet échantillon E, se présentent sous la forme d'un spectre qui tient compte des coefficients d'absorption $\mu$a et de diffusion $\mu$s' et qui constitue, en fait, une combinaison de ces coefficients ($\mu$a et $\mu$s'). Cette combinaison est caractérisée par une équation analytique simplifiée :

$$\begin{aligned} R(\rho) &= I_0 z_0 \frac{\exp(-\mu_{\text{eff}}\rho)}{2\pi\rho^2}\left(\mu_{\text{eff}} + \frac{1}{\rho}\right) \\ &= I_0 z_0 f(\mu_{\text{eff}}, \rho) \end{aligned}$$

(1)

Dans laquelle z0=1/ $\mu$s', 10 est l'intensité de la source lumineuse dans le milieu, $\rho$ est la distance par rapport à la source d'irradiation et $\mu$eff est une combinaison non linéaire de $\mu$a et $\mu$s'

$$\mu_{\text{eff}} = \sqrt{3\mu_a(\mu_a + \mu'_s)}$$

(2)

De plus, le spectre, obtenu par spectroscopie en mettant en oeuvre ce procédé, s'énonce également comme suit :

$$R(\rho) = \frac{I_0 a}{4\pi}\left[\frac{1}{\mu_{tr}}\left(\mu_{\text{eff}} + \frac{1}{r_1}\right)\frac{\exp(-\mu_{\text{eff}}r_1)}{r_1^2} + \left(\frac{1}{\mu_{tr}} + 2z_0\right)\left(\mu_{\text{eff}} + \frac{1}{r_2}\right)\frac{\exp(-\mu_{\text{eff}}r_2)}{r_2^2}\right]$$

(3)

Dans laquelle :

$$\mu_{\text{eff}} = \left[3\mu_a(\mu_a + \mu_s')\right]^{-1}$$
$$a = \mu_s'/\mu_{tr}$$
$$r_1 = [z_0^2 + \rho^2]^{1/2}$$
$$r_2 = [(z_0 + 2z_b)^2 + \rho^2]^{1/2}$$
$$z_0 = 1/\mu_s'$$
$$z_b = 2AD$$

Dans lesquelles :

- D est le coefficient de diffusion (fonction de $\mu_a$ et $\mu_s'$) ;
- A est un paramètre qui, d'une part, est invariable au cours d'une même mesure et, d'autre part, permet de prendre en compte la différence d'indice de réfraction à la surface du milieu.

Aussi, lorsqu'on détermine les coefficients d'absorption $\mu_a$ et/ou de diffusion $\mu_s'$ de l'échantillon E, on résout, en fait, les systèmes d'équations ci-dessus.

Finalement, lorsqu'on procède, par spectroscopie et en mettant en oeuvre un procédé décrit ci-dessus, à la détection d'une inhomogénéité I et/ou à la détermination du coefficient d'absorption et/ou de diffusion d'un échantillon E, on met en contact cet échantillon E, soit directement avec la sonde 2 (plus particulièrement avec la surface de contact 22 de celle-ci 2), soit avec l'élément diffusant qui est, alors, interposé entre cet échantillon E et la sonde 2 (plus particulièrement la surface de contact 22 de celle-ci 2).

Quelle que soit la nature de ce contact, cet échantillon E est positionné à une distance de la sonde 2 (plus particulièrement de la surface de contact 22 de celle-ci 2) inférieure à 5cm.

## Revendications

1. Sonde spectroscopique (2) pour dispositif d'analyse (1), par spectroscopie, d'un échantillon (E) et comportant :

   - des moyens (23) pour éclairer l'échantillon (E) à analyser avec une lumière incidente ;
   - des moyens (24 ; 24') pour capter une lumière réémise par l'échantillon (E) à analyser sous l'effet de la lumière incidente ;
   - une surface de contact (22), orientée en direction de l'échantillon (E) à analyser, au niveau ou à proximité de laquelle (22) se situent les moyens (23) pour éclairer l'échantillon et/ou les moyens (24 ; 24') pour capter la lumière réémise ;
   - les moyens (24 ; 24') pour capter la lumière réémise par l'échantillon (E) constituant au moins un jeu (25 ; 25') de moyens (24 ; 24') pour capter cette lumière réémise, un tel jeu (25 ; 25') comportant une pluralité de ces moyens (24a, 24b, 24c ; 24'a, 24'b, 24'c) pour capter la lumière réémise agencés, chacun, de manière espacée par rapport aux autres et à égale distance des moyens (23) pour éclairer l'échantillon (E) ou de leur barycentre ;

   **caractérisé en ce que** chaque moyen (24 ; 24') pour capter la lumière réémise par l'échantillon (E) comporte une série (241 ; 241') de fibres optiques (240 ; 240') constituée par une pluralité de fibres optiques (240 ; 240') qui sont juxtaposées et agencées conformément à un arc de cercle dont le centre est confondu avec les moyens (23) pour éclairer l'échantillon (E) ou avec leur barycentre.

2. Sonde spectroscopique (2) selon la revendication 1, **caractérisée par le fait que** les moyens (24 ; 24') pour capter la lumière réémise par l'échantillon (E) constituent une pluralité de jeux (25 ; 25') de moyens (24 ; 24') pour capter cette lumière réémise, chacun de ces jeux (25 ; 25') comportant une pluralité de ces moyens (24a, 24b, 24c ; 24'a, 24'b, 24'c) pour capter la lumière réémise agencés, chacun, de manière espacée par rapport aux autres et à égale distance des moyens (23) pour éclairer l'échantillon (E) ou de leur barycentre, tandis que les moyens (24 ; 24') pour capter la lumière réémise et que comporte un tel jeu (25 ; 25') sont situés, par rapport aux moyens (23) pour éclairer l'échantillon (E) ou à leur barycentre, à une distance distincte (d ; d') de celle (d' ; d) à laquelle sont situés les moyens (24' ; 24) pour capter la lumière réémise et que comporte un autre jeu (25' ; 25).

3. Sonde spectroscopique (2) selon l'une quelconque des revendications précédentes, **caractérisée par le fait que** les moyens (24 ; 24') pour capter la lumière réémise par l'échantillon (E) et que comporte un même jeu (25 ; 25') de ces moyens (24 ; 24'), sont agencés selon un cercle (C ; C') dont le centre est confondu avec les moyens (23) pour éclairer l'échantillon (E) ou avec leur barycentre.

4. Sonde spectroscopique selon la revendication 3, **caractérisée par le fait que** les moyens (24 ; 24') pour capter la lumière réémise par l'échantillon (E), et que comporte un même jeu (25 ; 25') de ces moyens (24 ; 24'), sont répartis angulairement de manière régulière selon le cercle (C ; C'), notamment de manière équiangulaire.

5. Sonde spectroscopique (2) selon l'une quelconque des revendications 3 ou 4, **caractérisée par le fait que** les moyens (24 ; 24') pour capter la lumière réémise par l'échantillon (E), et que comporte un même jeu (25 ; 25') de ces moyens (24 ; 24'), sont répartis selon le cercle (C ; C') en sorte que deux moyens (24 ; 24') pour capter la lumière réémise et se succédant sur ce cercle (C ; C') sont décalés angulairement d'un angle (a) compris entre 30 et 180°, de préférence compris entre 36 et 120°.

6. Sonde spectroscopique (2) selon l'une quelconque des revendications précédentes, **caractérisée par le fait qu'**un moyen (24 ; 24') pour capter la lumière réémise par l'échantillon (E) comporte 3 fibres optiques (240 ; 240').

7. Sonde spectroscopique (2) selon l'une quelconque des revendications précédentes, **caractérisée par le fait que** les moyens (23) pour éclairer l'échantillon (E) comportent au moins une fibre optique (230) ou au moins un faisceau (231) de fibres optiques (230), plus particulièrement constitué par au moins deux fibres optiques (230).

8. Sonde spectroscopique (2) selon l'une quelconque des revendications 6 ou 7, **caractérisée par le fait qu'**une fibre optique (240, 240', 230) présente une extrémité positionnée, soit au niveau de la surface de contact (22) de la sonde (2), notamment de manière affleurante avec cette surface de contact (22), soit à proximité de cette surface de contact (22), notamment en retrait par rapport à cette surface de contact (22).

9. Sonde spectroscopique (2) selon l'une quelconque des revendications précédentes, **caractérisée par le fait que** la surface de contact (22) de la sonde (2) comporte au moins un moyen (220) pour recevoir la lumière réémise par l'échantillon (E), ce moyen (220) est de type réfléchissant et est constitué, soit par au moins une portion polie ou blanche de cette surface de contact (22), soit par un revêtement réfléchissant que comporte au moins une portion de cette surface de contact (22).

10. Sonde spectroscopique (2) selon l'une quelconque des revendications précédentes, **caractérisée par le fait que** la surface de contact (22) de la sonde (2) comporte au moins un moyen (220) pour recevoir la lumière réémise par l'échantillon (E), ce moyen (220) est de type au moins en partie absorbant et est constitué, soit par un matériau coloré constituant au moins une portion de cette surface de contact (22), soit par un revêtement coloré que comporte au moins une portion de cette surface de contact (22).

11. Sonde spectroscopique (2) selon l'une quelconque des revendications précédentes, **caractérisée par le fait que** la sonde (2) comporte un moyen pour protéger les moyens (23) pour éclairer l'échantillon et/ou les moyens (24 ; 24') pour capter une lumière réémise par cet échantillon (E), voire la surface de contact (22), un tel moyen pour protéger étant positionné à l'avant et contre la surface de contact (22), plus particulièrement en étant rapporté sur cette surface de contact (22).

12. Dispositif d'analyse (1), par spectroscopie, d'un échantillon (E) comportant :

   - une sonde spectroscopique (2) conforme à l'une quelconque des revendications précédentes ;
   - un spectromètre incorporant, d'une part, un moyen (3) pour émettre une lumière mono ou polychromatique et, d'autre part, des moyens (4) pour mesurer et/ou traiter au moins un signal optique réémis par l'échantillon (E);
   - des moyens (5) pour raccorder la sonde (2) au spectromètre ainsi qu'un organe (7), notamment un multiplexeur, interposé entre les moyens (5) pour raccorder et lesdits moyens (4) pour mesurer et/ou traiter au moins un signal optique.

13. Dispositif d'analyse (1) selon la revendication 12, **caractérisé par le fait qu'**il comporte un élément (6), interposé entre la surface de contact (22) que comporte la sonde (2) et l'échantillon (E) à analyser, et conçu pour diffuser au moins la lumière incidente.

14. Procédé de détection, par spectroscopie, d'une inhomogénéité (I) dans un échantillon (E), ce procédé consistant en ce que :

- on éclaire l'échantillon (E) avec une lumière incidente, ceci à l'aide de moyens (23) pour éclairer cet échantillon (E) 30 avec une telle lumière incidente ;
- on capte la lumière réémise par l'échantillon (E) sous l'effet de la lumière incidente, ceci à l'aide de moyens (24 ; 24') pour capter une telle lumière réémise par l'échantillon (E) en différents endroits ;
- à partir des signaux correspondant à la lumière réémise et captée en au moins deux endroits différents, on détermine la présence d'une inhomogénéité (I) dans l'échantillon (E) ;

le procédé étant **caractérisé par le fait que** l'on capte la lumière réémise par l'échantillon (E) en différents endroits correspondant à la position des moyens (24 ; 24') pour capter la lumière, ces moyens (24, 24') pour capter la lumière :

- constituant au moins un jeu (25 ; 25') de moyens (24 ; 24') pour capter cette lumière réémise, un tel jeu (25 ; 25') comportant une pluralité de ces moyens (24a, 24b, 24c ; 24'a, 24'b, 24'c) pour capter la lumière réémise agencés, chacun, de manière espacée par rapport aux autres et à égale distance des moyens (23) pour éclairer l'échantillon (E) ou de leur barycentre ;
- et chaque moyen pour capter la lumière comportant une série (241 ; 241') de fibres optiques (240 ; 240') constituée par une pluralité de fibres optiques (240 ; 240') qui sont juxtaposées et agencées conformément à un arc de cercle dont le centre est confondu avec les moyens (23) pour éclairer l'échantillon (E) ou avec leur barycentre.

15. Procédé de détection, par spectroscopie, d'une inhomogénéité (I) dans un échantillon (E), selon la revendication 14, **caractérisé par le fait qu'**on capte la lumière réémise par l'échantillon (E), ceci en différents endroits agencés selon un cercle (C ; C') dont le centre est confondu avec les moyens (23) pour éclairer l'échantillon (E) ou avec leur barycentre, notamment répartis angulairement de manière régulière selon ce cercle (C ; C').

16. Procédé de détection, par spectroscopie, d'une inhomogénéité (I) dans un échantillon (E), selon l'une quelconque des revendications 14 ou 15, **caractérisé par le fait qu'**on détermine la présence d'une inhomogénéité chimique, respectivement physique, dans l'échantillon (E):

- en divisant un signal correspondant à la lumière captée en un endroit par un signal correspondant à la lumière captée en un autre endroit ;
- et en mettant en évidence, par cette division, un pic, respectivement un quotient différent de 1.

17. Procédé de détection, par spectroscopie, d'une inhomogénéité (I) dans un échantillon (E), selon l'une quelconque des revendications 14 à 16, **caractérisé par le fait que** ce procédé est mis en oeuvre par un dispositif d'analyse (1) conforme à l'une quelconque des revendications 12 ou 13 et/ou comportant au moins une sonde spectroscopique (2) conforme à l'une quelconque des revendications 1 à 11.

18. Procédé pour analyser un échantillon par spectroscopie, comprenant un procédé de détection d'une inhomogénéité (I) dans un échantillon (E) selon l'une quelconque des revendications 14 à 17, **caractérisé en ce qu'**il comprend en outre une détermination, par spectroscopie, du coefficient d'absorption ($\mu$a) et/ou de diffusion ($\mu$s') de l'échantillon (E), consistant **en ce que** :

- on éclaire l'échantillon (E) avec une lumière incidente, ceci à l'aide des moyens (23) pour éclairer cet échantillon (E) avec une telle lumière incidente ;
- on capte la lumière réémise par l'échantillon (E) sous l'effet de la lumière incidente, ceci à l'aide des moyens (24 ; 24') pour capter une telle lumière réémise par l'échantillon (E), ceci en au moins deux endroits différents situés chacun à une distance (d ; d') différente des moyens (23) pour éclairer cet échantillon (E) ou de leur barycentre ;
- à partir des signaux correspondant à la lumière réémise et captée en ces différents endroits, on détermine le coefficient d'absorption ($\mu$a) et/ou de diffusion ($\mu$s') de l'échantillon (E).

19. Procédé pour analyser un échantillon par spectroscopie selon la revendication 18, dans lequel pour la détermination du coefficient d'absorption ($\mu$a) et/ou de diffusion ($\mu$s') de l'échantillon (E), on capte la lumière réémise par l'échantillon (E), ceci en au moins un endroit situé sur un premier cercle (C) dont le centre est confondu avec les moyens (23) pour éclairer l'échantillon (E) ou avec leur barycentre, ainsi qu'en au moins un autre endroit situé sur un deuxième cercle (C'), de rayon différent de celui du premier cercle (C), et dont le centre est confondu avec les moyens (23) pour éclairer l'échantillon (E) ou avec leur barycentre ;

- à partir des signaux correspondant à la lumière réémise et captée en ces différents endroits, on détermine le coefficient d'absorption ($\mu$a) et/ou de diffusion ($\mu$s') de l'échantillon (E).

20. Procédé pour analyser un échantillon par spectroscopie selon l'une quelconque des revendications 18 ou 19, **caractérisé par le fait que** ce procédé est mis en oeuvre par un dispositif d'analyse (1) comportant au moins une sonde spectroscopique (2) conforme à la revendication 2.

**Patentansprüche**

1. Spektroskopische Sonde (2) für Vorrichtung (1) zur Analyse einer Probe (E) mittels Spektroskopie, umfassend:

   - Mittel (23) zur Beleuchtung der zu untersuchenden Probe (E) mit einem Auflicht;
   - Mittel (24; 24') zum Fassen eines Lichts, das durch die zu untersuchende Probe (E) unter Einwirkung des Auflichts rückgestrahlt wird;
   - eine in Richtung der zu untersuchenden Probe (E) ausgerichtete Kontaktoberfläche (22), an welcher oder in der Nähe derer (22) die Mittel (23) zur Beleuchtung der Probe und/oder die Mittel (24; 24') zum Fassen des rückgestrahlten Lichts gelagert sind;
   - wobei die Mittel (24, 24') zum Fassen des durch die Probe (E) rückgestrahlten Lichts mindestens einen Satz (25; 25') von Mitteln (24; 24') zum Fassen des rückgestrahlten Lichts bilden, wobei ein solcher Satz (25; 25') eine Vielzahl von diesen Mitteln (24a, 24b, 24c; 24'a, 24'b, 24'c) zum Fassen des rückgestrahlten Lichts umfasst, welche jeweils beabstandet voneinander und in gleicher Entfernung zu den Mitteln (23) zur Beleuchtung der Probe (E) oder zu ihrem Baryzentrum angeordnet sind,

   **dadurch gekennzeichnet, dass** jedes Mittel (24; 24') zum Fassen des durch die Probe (E) rückgestrahlten Lichts eine Serie (241; 241') von Lichtwellenleitern (240; 240') umfasst, welche aus einer Vielzahl von Lichtwellenleitern (240; 240') besteht, die nebeneinander liegen und einen Kreisbogen bildend gelagert sind, dessen Mittelpunkt mit den Mitteln (23) zur Beleuchtung der Probe (E) oder mit ihrem Baryzentrum übereinstimmt.

2. Spektroskopische Sonde (2) nach Anspruch 1, **dadurch gekennzeichnet, dass** die Mittel (24; 24') zum Fassen des durch die Probe (E) rückgestrahlten Lichts eine Vielzahl von Sätzen (25; 25') von Mitteln (24; 24') zum Fassen dieses rückgestrahlten Lichts bilden, wobei jeder dieser Sätze (25, 25') eine Vielzahl von diesen Mitteln (24a, 24b, 24c; 24'a, 24'b, 24'c) zum Fassen des rückgestrahlten Lichts umfasst, welche jeweils voneinander beabstandet und in gleicher Entfernung zu den Mitteln (23) zur Beleuchtung der Probe (E) oder zu ihrem Baryzentrum gelagert sind, während die von einem solchen Satz (25, 25') umfassten Mittel (24; 24') zum Fassen des rückgestrahlten Lichts in einer Entfernung (d; d') zu den Mitteln (23) zur Beleuchtung der Probe (E) oder zu ihrem Baryzentrum gelagert sind, die anders als die Entfernung (d', d) ist, zu der die von einem weiteren Satz (25'; 25) umfassten Mittel (24'; 24) zum Fassen des rückgestrahlten Lichts gelagert sind.

3. Spektroskopische Sonde (2) nach einem der vorhergehenden Ansprüche, **dadurch gekennzeichnet, dass** die von einem gleichen Satz (25; 25') dieser Mittel (24; 24') umfassten Mittel (24; 24') zum Fassen des durch die Probe (E) rückgestrahlten Lichts in einem Kreis (C; C') gelagert sind, dessen Mittelpunkt mit den Mitteln (23) zur Beleuchtung der Probe (E) oder mit ihrem Baryzentrum übereinstimmt.

4. Spektroskopische Sonde (2) nach Anspruch 3, **dadurch gekennzeichnet, dass** die von einem gleichen Satz (25; 25') dieser Mittel (24; 24') umfassten Mittel (24; 24') zum Fassen des durch die Probe (E) rückgestrahlten Lichts in regelmäßigen Winkelabständen im Kreis (C; C'), insbesondere in gleichen Winkelabständen, verteilt sind.

5. Spektroskopische Sonde (2) nach einem der vorhergehenden Ansprüche 3 oder 4, **dadurch gekennzeichnet, dass** die von einem gleichen Satz (25; 25') dieser Mittel (24; 24') umfassten Mittel (24; 24') zum Fassen des durch die Probe (E) rückgestrahlten Lichts im Kreis (C; C') derart verteilt sind, sodass zwei Mittel (24; 24') zum Fassen des rückgestrahlten Lichts, die in diesem Kreis (C; C') hintereinander liegen, in einem Winkel (a) zwischen 30° und 180°, vorzugsweise zwischen 36° und 120°, winklig versetzt sind.

6. Spektroskopische Sonde (2) nach einem der vorhergehenden Ansprüche, **dadurch gekennzeichnet, dass** ein Mittel (24; 24') zum Fassen des durch die Probe (E) rückgestrahlten Lichts 3 Lichtwellenleiter (240; 240') umfasst.

7. Spektroskopische Sonde (2) nach einem der vorhergehenden Ansprüche, **dadurch gekennzeichnet, dass** die Mittel (23) zur Beleuchtung der Probe (E) mindestens einen Lichtwellenleiter (230) oder mindestens ein Bündel (231) von Lichtwellenleitern (230) umfassen, das insbesondere aus mindestens zwei Lichtwellenleitern (230) besteht.

8. Spektroskopische Sonde (2) nach einem der Ansprüche 6 oder 7, **dadurch gekennzeichnet, dass** ein Lichtwellenleiter (240, 240', 230) ein Ende aufweist, das entweder an der Kontaktoberfläche (22) der Sonde (2) insbesondere flächenbündig mit dieser Kontaktoberfläche (22) oder in der Nähe der Kontaktoberfläche (22) insbesondere zurückversetzt von der Kontaktoberfläche (22) gelagert ist.

9. Spektroskopische Sonde (2) nach einem der vorhergehenden Ansprüche, **dadurch gekennzeichnet, dass** die Kontaktoberfläche (22) der Sonde (2) mindestens ein Mittel (220) zum Empfangen des durch die Probe (E) rückgestrahlten Lichts umfasst, wobei dieses Mittel (220) reflektierend ist und aus entweder mindestens einem polierten oder weißen Abschnitt der Kontaktoberfläche (22) oder einer reflektierenden, auf mindestens einem Abschnitt der Kontaktoberfläche (22) aufgetragenen Beschichtung besteht.

10. Spektroskopische Sonde (2) nach einem der vorhergehenden Ansprüche, **dadurch gekennzeichnet, dass** die Kontaktoberfläche (22) der Sonde (2) mindestens ein Mittel (220) zum Empfangen des durch die Probe (E) rückgestrahlten Lichts umfasst, wobei dieses Mittel (220) zumindest teilweise absorbierend ist und aus entweder einem farbigen, mindestens einen Abschnitt der Kontaktoberfläche (22) bildenden Werkstoff oder aus einer farbigen, auf mindestens einem Abschnitt der Kontaktoberfläche (22) aufgetragenen Beschichtung besteht.

11. Spektroskopische Sonde (2) nach einem der vorhergehenden Ansprüche, **dadurch gekennzeichnet, dass** die Sonde (2) ein Mittel zum Schutz der Mittel (23) zur Beleuchtung der Probe und/oder der Mittel (24; 24') zum Fassen eines durch die Probe (E) bzw. durch die Kontaktoberfläche (22) rückgestrahlten Lichts umfasst, wobei ein solches Schutzmittel vorne und gegen der Kontaktoberfläche (22) gelagert ist, wobei es insbesondere auf dieser Kontaktoberfläche (22) angebracht ist.

12. Analysevorrichtung (1) einer Probe (E) mittels Spektroskopie, umfassend:

    - eine spektroskopische Sonde (2) nach einem der vorhergehenden Ansprüche,
    - einen Spektrometer, der erstens ein Mittel (3) zum Ausstrahlen eines mono- oder polychromatischen Lichts und zweitens Mittel (4) zur Bemessung und/oder Bearbeitung mindestens eines optischen, durch die Probe (E) rückgestrahlten Signals enthält,
    - Mittel (5) zur Verbindung der Sonde (2) mit dem Spektrometer sowie ein Organ (7), insbesondere einen Multiplexer, das zwischen den Verbindungsmitteln (5) und den Mitteln (4) zur Bemessung und/oder Bearbeitung mindestens eines optischen Signals angeordnet ist.

13. Analysevorrichtung (1) nach Anspruch 12, **dadurch gekennzeichnet, dass** sie ein Element (6) umfasst, das zwischen der von der Sonde (2) enthaltenen Kontaktoberfläche (22) und der zu untersuchenden Probe (E) angeordnet und zum Abstrahlen mindestens des Auflichts ausgebildet ist.

14. Verfahren zur Erkennung einer Inhomogenität (I) in einer Probe (E) mittels Spektroskopie, wobei dieses Verfahren daraus besteht, dass:

    - die Probe (E) mit einem Auflicht beleuchtet wird, und zwar mit Hilfe von Mitteln (23) zur Beleuchtung der Probe (E) mit einem solchen Auflicht,
    - das durch die Probe (E) unter Einwirkung des Auflichts rückgestrahlte Licht gefasst wird, und zwar mit Hilfe von Mitteln (24; 24') zum Fassen an verschiedenen Stellen eines solchen, durch die Probe (E) rückgestrahlten Lichts,
    - anhand der Signale, die dem rückgestrahlten und an mindestens zwei verschiedenen Stellen gefassten Licht entsprechen, das Vorliegen einer Inhomogenität (I) in der Probe (E) bestimmt wird,

    wobei das Verfahren **dadurch gekennzeichnet ist, dass** das durch die Probe (E) rückgestrahlte Licht an verschiedenen Stellen, die der Position der Mittel (24; 24') zum Fassen des Lichts entsprechen, gefasst wird, wobei diese Mittel (24, 24') zum Fassen des Lichts:

    - mindestens einen Satz (25; 25') von Mitteln (24; 24') zum Fassen des rückgestrahlten Lichts bilden, wobei ein solcher Satz (25; 25') eine Vielzahl von diesen Mitteln (24a, 24b, 24c; 24'a, 24'b, 24'c) zum Fassen des rückgestrahlten Lichts umfasst, welche jeweils voneinander beabstandet und in gleicher Entfernung zu den Mitteln (23) zur Beleuchtung der Probe (E) oder zu ihrem Baryzentrum angeordnet sind,
- und wobei jedes Mittel zum Fassen des Lichts eine Serie (241; 241') von Lichtwellenleitern (240; 240') umfasst, welche aus einer Vielzahl von Lichtwellenleitern (240; 240') besteht, die nebeneinander liegen und in einem Kreisbogen gelagert sind, dessen Mittelpunkt mit den Mitteln (23) zur Beleuchtung der Probe (E) oder mit ihrem Baryzentrum übereinstimmt.

15. Verfahren zur Erkennung einer Inhomogenität (I) in einer Probe (E) mittels Spektroskopie nach Anspruch 14, **dadurch gekennzeichnet, dass** das durch die Probe (E) rückgestrahlte Licht an verschiedenen Stellen gefasst wird, welche in einem Kreis (C; C') angeordnet sind, dessen Mittelpunkt mit den Mitteln (23) zur Beleuchtung der Probe (E) oder ihrem Baryzentrum übereinstimmt, und insbesondere in regelmäßigen Winkelabständen zu diesem Kreis (C; C') verteilt sind.

16. Verfahren zur Erkennung einer Inhomogenität (I) in einer Probe (E) mittels Spektroskopie nach einem der Ansprüche 14 oder 15, **dadurch gekennzeichnet, dass** das Vorliegen einer chemischen bzw. physischen Inhomogenität in der Probe (E) bestimmt wird:

- wobei ein Signal geteilt wird, das dem Licht entspricht, das an einer Stelle durch ein Signal gefasst wird, welches dem an einer anderen Stelle gefassten Licht entspricht,
- und wobei durch diese Teilung ein Spitzenwert bzw. ein Quotient nicht gleich 1 hervorgehoben wird.

17. Verfahren zur Erkennung einer Inhomogenität (I) in einer Probe (E) mittels Spektroskopie nach einem der Ansprüche 14 bis 16, **dadurch gekennzeichnet, dass** das Verfahren durch eine Analysevorrichtung (1) nach einem der Ansprüche 12 oder 13 eingesetzt wird, und/oder die mindestens eine spektroskopische Sonde (2) nach einem der Ansprüche 1 bis 11 umfasst.

18. Verfahren zur Analyse einer Probe mittels Spektroskopie, umfassend ein Verfahren zur Erkennung einer Inhomogenität (I) in einer Probe (E) nach einem der Ansprüche 14 bis 17, **dadurch gekennzeichnet, dass** es außerdem eine Bestimmung mittels Spektroskopie des Absorptionskoeffizients ($\mu$a) und/oder des Diffusionskoeffizients ($\mu$s') der Probe (E) umfasst, wobei es darin besteht, dass:

- die Probe (E) mit einem Auflicht beleuchtet wird, und zwar mit Hilfe der Mittel (23) zur Beleuchtung dieser Probe (E) mit einem solchen Auflicht,
- das durch die Probe (E) unter Einwirkung des Auflichts rückgestrahlte Licht gefasst wird, und zwar mit Hilfe der Mittel (24; 24') zum Fassen eines solchen durch die Probe (E) rückgestrahlten Lichts, an mindestens zwei verschiedenen Stellen, die jeweils in einer unterschiedlichen Entfernung (d; d') zu den Mitteln (23) zur Beleuchtung dieser Probe (E) oder zu ihrem Baryzentrum gelagert sind,
- der Absorptionskoeffizient ($\mu$a) und/oder der Diffusionskoeffizient ($\mu$s') der Probe (E) anhand der dem rückgestrahlten und an den verschiedenen Stellen gefassten Licht entsprechenden Signale ermittelt werden.

19. Verfahren zur Analyse einer Probe mittels Spektroskopie nach Anspruch 18, wobei zur Ermittlung des Absorptionskoeffizients ($\mu$a) und/oder des Diffusionskoeffizients ($\mu$s') der Probe (E) das durch die Probe (E) rückgestrahlte Licht an mindestens einer Stelle gefasst wird, die auf einem ersten Kreis (C) liegt, dessen Mittelpunkt mit den Mitteln (23) zur Beleuchtung der Probe (E) oder mit ihrem Baryzentrum übereinstimmt, sowie an mindestens einer weiteren Stelle, die auf einem zweiten Kreis (C') liegt, dessen Radius anders als der des ersten Kreises (C) ist und dessen Mittelpunkt mit den Mitteln (23) zur Beleuchtung der Probe (E) oder mit ihrem Baryzentrum übereinstimmt,

- der Absorptionskoeffizient ($\mu$a) und/oder der Diffusionskoeffizient ($\mu$s') der Probe (E) anhand der dem rückgestrahlten und an diesen verschiedenen Stellen gefassten Licht entsprechenden Signale ermittelt werden.

20. Verfahren zur Analyse einer Probe mittels Spektroskopie nach einem der Ansprüche 18 oder 19, **dadurch gekennzeichnet, dass** das Verfahren durch eine Analysevorrichtung (1) eingesetzt wird, welche mindestens eine spektroskopische Sonde (2) nach dem Anspruch 2 umfasst.

**Claims**

1. Spectroscopic probe (2) for a device for analyzing (1) a sample (E) by spectroscopy, including:

- means (23) for illuminating the sample (E) to be analyzed with incident light;
- means (24 ; 24') for collecting light re-emitted by the sample (E) to be analyzed under the action of the incident light;
- a contact surface (22) oriented towards the sample (E) to be analyzed, at the level of which, or nearby which (22) the means (23) for illuminating the sample and/or the means (24 ; 24') for collecting the re-emitted light are located;
- the means (24 ; 24') for collecting the light re-emitted by the sample (E) constitute at least one set (25 ; 25') of means (24 ; 24') for collecting this re-emitted light; such a set (25 ; 25') including a plurality of these means (24a, 24b, 24c ; 24'a, 24'b, 24'c) for collecting the re-emitted light arranged each spaced apart from the other ones and at the same distance from the means (23) for illuminating the sample (E) or their barycenter;

**characterized in that** each means (24 ; 24') for collecting the light re-emitted by the sample (E) includes one series (241 ; 241') of optical fibers (240 ; 240') formed of a plurality of optical fibers (240 ; 240') which are juxtaposed and arranged according to an arc of circle the center of which coincides with the means (23) for illuminating the sample (E) or with their barycenter.

2. Spectroscopic probe (2) according to claim 1, **characterized by** the fact that the means (24 ; 24') for collecting the light re-emitted by the sample (E) constitute a plurality of sets (25 ; 25') of means (24 ; 24') for collecting the re-emitted light; each of these sets (25 ; 25') including a plurality of these means (24a, 24b, 24c ; 24'a, 24'b, 24'c) for collecting the re-emitted light arranged each spaced apart from the other ones and at the same distance from the means (23) for illuminating the sample (E) or from their barycenter; whereas the means (24 ; 24') for collecting the re-emitted light, which such a set (25 ; 25') includes, being located, with respect to the means (23) for illuminating the sample (E) or their barycenter, at a distance (d ; d') differing from the distance (d' ; d) at which are located the means (24' ; 24) for collecting the re-emitted light, which another set (25' ; 25) includes.

3. Spectroscopic probe (2) according to any of preceding claims, **characterized by** the fact that the means (24 ; 24') for collecting the light re-emitted by the sample (E) and which a same set (25 ; 25') of these means (24 ; 24') includes, are arranged on a circle (C ; C') the center of which coincides with the means (23) for illuminating the sample (E) or with their barycenter.

4. Spectroscopic probe according to claim 3, **characterized by** the fact that the means (24 ; 24') for collecting the light re-emitted by the sample (E) and which a same set (25 ; 25') of these means (24 ; 24') includes, are regularly angularly distributed over the circle (C ; C'), in particular equiangularly.

5. Spectroscopic probe (2) according to any of claims 3 or 4, **characterized by** the fact that the means (24 ; 24') for collecting the light re-emitted by the sample (E) which a same set (25 ; 25') of these means (24 ; 24') includes, are distributed over the circle (C ; C') so that two means (24 ; 24') for collecting the re-emitted light following each other on this circle (C ; C') are angularly shifted by an angle ($\alpha$) comprised between 30 and 180°, preferably comprised between 36 and 120°.

6. Spectroscopic probe (2) according to any of preceding claims, **characterized by** the fact that a means (24 ; 24') for collecting the light re-emitted by the sample (E) includes 3 optical fibers (240 ; 240').

7. Spectroscopic probe (2) according to any of preceding claims, **characterized by** the fact that the means (23) for illuminating the sample (E) include at least one optical fiber (230) or at least one bundle (231) of optical fibers (230), more particularly constituted by at least two optical fibers (230).

8. Spectroscopic probe (2) according to any of claims 6 or 7, **characterized by** the fact that an optical fiber (240, 240', 230) has an end positioned either at the level of the contact surface (22) of the probe (2), flush with this contact surface (22), or nearby this contact surface (22), in particular set back with respect to this contact surface (22).

9. Spectroscopic probe (2) according to any of preceding claims, **characterized by** the fact that the contact surface (22) of the probe (2) includes at least one means (220) for receiving the light re-emitted by the sample (E), this means (220) being of a reflecting type and being formed, either of at least one polished or white portion of this contact surface (22), or of a reflecting coating that at least one portion of this contact surface (22) includes.

10. Spectroscopic probe (2) according to any of preceding claims, **characterized by** the fact that the contact surface (22) of the probe (2) includes at least one means (220) for receiving the light re-emitted by the sample (E), this means (220) being of an at least partially absorbent type and being formed, either of a colored material forming at least one portion of this contact surface (22), or of a colored coating that at least one portion of this contact surface (22) includes.

**11.** Spectroscopic probe (2) according to any of preceding claims, **characterized by** the fact that the probe (2) includes one means for protecting the means (23) for illuminating the sample and/or the means (24 ; 24') for collecting light re-emitted by the sample (E) and/or the contact surface (22), such means for protecting being positioned at the front and against the contact surface (22), more particularly on this contact surface (22).

**12.** Device for analyzing (1) a sample (E) by spectroscopy, including:

   a spectroscopic probe (2) according to any of preceding claims;
   a spectrometer incorporating means (3) for emitting monochromatic or polychromatic light, and means (4) for measuring and/or processing at least an optical signal re-emitted by the sample (E);
   means (5) for connecting the probe (2) to the spectrometer, and a system (7), such as a multiplexer, interposed between said means (5) for connecting means (4) for measuring and/or processing at least an optical signal.

**13.** Device for analyzing (1) according to claim 12, **characterized by** the fact that the device includes an element (6), interposed between the contact surface (22) which the probe (2) includes and the sample (E) to be analyzed, and designed so as to diffuse at least the incident light.

**14.** Method for detecting, by spectroscopy, an inhomogeneity (I) in a sample (E), this method consisting in that:

   the sample (E) is illuminated with incident light, using means (23) for illuminating the sample (E) with such an incident light;
   the light re-emitted by the sample (E) is collected, using means (24 ; 24') for collecting such a light re-emitted by the sample (E) at different spots;
   on the basis of the signals corresponding to said light re-emitted and collected at least at two different spots, the presence of an inhomogeneity (I) in the sample (E) is determined;
   the method being **characterized by** the fact that the light re-emitted by the sample (E) is collected at different spots corresponding to the position of means (24 ; 24') for collecting light, these means (24 ; 24') for collecting light:

      - constituting at least one set (25 ; 25') of means (24 ; 24') for collecting this re-emitted light; such a set (25 ; 25') including a plurality of these means (24a, 24b, 24c ; 24'a, 24'b, 24'c) for collecting the re-emitted light arranged, each, spaced apart from each other and at the same distance from the means (23) for illuminating the sample (E) or their barycenter;
      - and each means for collecting the light including one series (241 ; 241') of optical fibers (240 ; 240') formed of a plurality of optical fibers (240 ; 240') which are juxtaposed and arranged according to an arc of circle the center of which coincides with the means (23) for illuminating the sample (E) or with their barycenter.

**15.** Method for detecting, by spectroscopy, an inhomogeneity (I) in a sample (E), according to claim 14, **characterized by** the fact that the light re-emitted by the sample (E) is collected at different spots arranged on a circle (C ; C') the center of which coincides with the means (23) for illuminating the sample (E) or with their barycenter, in particular regularly angularly distributed over the circle (C ; C').

**16.** Method for detecting, by spectroscopy, a physical inhomogeneity (I) in a sample (E), according to any of claims 14 or 15, **characterized by** the fact that the presence of a chemical, respectively physical, inhomogeneity (I) in the sample (E) is determined:

   - by dividing a signal corresponding to the light collected at one spot by a signal corresponding to the light collected at another spot ;
   - and by identifying, through this division, a peak, a quotient different from 1.

**17.** Method for detecting, by spectroscopy, an inhomogeneity (I) in a sample (E), according to any of claims 14 to 16, **characterized by** the fact that this method is implemented with an analyzing device (1) according to any of claims 12 or 13 and/or including at least a spectroscopic probe (2) according to any of claims 1 to 11.

18. Method for analyzing a sample by spectroscopy, comprising a method for detecting, by spectroscopy, an inhomogeneity (I) in a sample (E) according to any of claims 14 to 17, **characterized in that** it further comprises a step of determining, by spectroscopy, the absorption coefficient ($\mu$a) and/or the diffusion coefficient ($\mu$s') of a sample (E), consisting **in that**:

- the sample (E) is illuminated with an incident light, this through means (23) for illuminating this sample (E) with such an incident light ;
- the light re-emitted by the sample (E) is collected under the action of the incident light, using means (24 ; 24') for collecting such a light re-emitted by the sample (E); at least at two different spots, each spot being located at a distance (d ; d') different from the means (23) for illuminating this sample (E) or from their barycenter;
- on the basis of the signals corresponding to the light re-emitted and collected at these different spots, the absorption coefficient ($\mu$a) and/or the diffusion coefficient ($\mu$s') of the sample (E) are determined.

19. Method for analyzing a sample by spectroscopy according to claim 18, wherein for determining the absorption coefficient ($\mu$a) and/or the diffusion coefficient ($\mu$s') of a sample (E), the light re-emitted by the sample (E) is collected at least at one spot located on a first circle (C) the center of which coincides with the means (23) for illuminating the sample (E) or with their barycenter, and at least at another spot located on a second circle (C') the radius of which differs from that of the first circle (C) and the center of which coincides with the means (23) for illuminating the sample (E) or with their barycenter ;

- using the signals corresponding to the light re-emitted and collected at these different spots, the absorption coefficient ($\mu$a) and/or the diffusion coefficient ($\mu$s') of the sample (E) are determined.

20. Method for analyzing a sample by spectroscopy according to any of claims 18 or 19, **characterized by** the fact that this method is implemented by an analyzing device (1) comprising at least a spectroscopic probe (2) according to claim 2.

**FIG. 1**

**FIG. 2**

EP 2 435 816 B1

FIG. 3

FIG. 4

20

**RÉFÉRENCES CITÉES DANS LA DESCRIPTION**

**Documents brevets cités dans la description**

- US 20020180953 A1

- WO 0020843 A1